# EUROPEAN PATENT APPLICATION

(11) **EP 2 166 441 A1**
(43) Date of publication of application: **24.03.2010**
(21) Application number: 08016693.7
(22) Date of filing: 23.09.2008
(51) Int. Cl.: G06F 3/048

(54) **Method and device for communicating**

(71) Applicant: Vodafone Holding GmbH, 40213 Düsseldorf (DE)
(72) Inventor: Velick, Deborah, 40233 Düsseldorf (DE)
(74) Representative: Jostarndt, Hans-Dieter

(57) **Abstract**

A method for communicating between digital communication devices which are connected by a communication network is suggested. The communication network provides access to stored data items. The method comprises the following steps:
- controlling a display of a source communication device to present icons within a graphical user interface, wherein the icons are related with data items;
- selecting data items to be communicated;
- selecting from a menu a communication channel which is to be used for communicating the selected data items;
- controlling the display of the source communication device to present contacts within the graphical user interface, wherein each contact is associated with one or several target communication devices;
-entering a single command to transmit the selected data items to all selected contacts. In addition to that a device and a system enabling a user to execute the method are suggested as well.

## Description

The present invention is related to a method and device for communicating as well as to a system. In particular, the present invention is related to a method according to claim 1, a device according to claim 10, and a system according to claim 11.

### Background of the invention

Communication generally becomes more and more important today. Especially communication with modern digital communication devices such as personal digital assistants (PDA), portable computers, mobile telephones, palm top computers etc. is of increasing importance. Sometimes these devices are also equipped with a camera and a microphone for taking pictures as well as for recording video and audio data. The features and capabilities of the devices lead to an increasing number of data files that maybe exchanged between different devices and users by wireless or wired networks. As an example, a mobile telephone is no longer limited to receiving and making voice calls but it may take photographs, receive e-mails and SMS-messages and voice messages. A variety of different kinds of communication increases the number of communication items significantly. This number of communication items is increased even more because one and the same communication items of the above mentioned types is frequently copied to a plurality of recipients. In addition to that, the communication devices store contact information of every individual with whom any kind of communication has taken place. This type of information is referred to as contacts. The contacts form part of the communication items. Technically speaking all communication items are data items. Because of the shear quantity it becomes consequently more and more difficult for individuals to organize their communication items. Some of these communication items contain valuable data for the user and the prudent user will therefore make backups of the data stored on his mobile device.

E.g. this can be done through appropriate software running on a computer to synchronise the computer with the mobile device. However, in reality some users do not pay the necessary attention to this aspect. In consequence, they loose valuable data if their mobile communication device gets lost or destroyed. Under this aspect it is quite advantageous if the data items of the user are not only stored on his mobile communication device but also on a server of a network provider.

In this case the user does not have to take any action to make a backup storage of his communication items and contacts. If his mobile communication device gets lost or destroyed all his communication items which were stored on his mobile communication device can be recovered from the backup copy stored on the server of the network provider.

At the same time this concept enables the user to work on the communication items not only through his mobile device but also through other alternative devices which are allowed to have contact to the personal files of the user on the server. Such an alternative device could be a computer with internet access allowing the user to contact the files which are stored on the server of the network provider. This is a very useful feature because in this way the user can work more conveniently on information he has received because a computer in general provides a relatively larger screen and a more comfortable keyboard compared with most handheld mobile devices.

Taking this as a starting point there is a need for technologies providing users with a efficient access to data items related to communication contents and contacts. Specifically, there is a need for a method to efficiently communicate with other users as well as for a device and a system supporting efficient communication.

### Summary of the invention

The present invention therefore suggests a method for communicating between digital communication devices which are connected by a communication network. The communication network provides access to stored data items. The method comprises the following steps:
- controlling a display of a source communication device to present icons within a graphical user interface, wherein the icons are related with data items;
- selecting data items to be communicated;
- selecting from a menu a communication channel which is to be used for communicating the selected data items;
- controlling the display of the source communication device to present contacts within the graphical user interface, wherein each contact is associated with one or several target communication devices;
- entering a single command to transmit the selected data items to all selected contacts.

In an advantageous embodiment of the invention the method further comprises the step of sorting the stored data items according to contacts. In this way the user has a good overview of his already existing contacts.

According to a useful embodiment of the inventive method, it further comprises the step of sorting the data items related to contacts in a first window of the graphical user interface and sorting all other kinds of data items in a second window of the graphical user interface. Again, this is a feature helping the user to efficiently manage his communication tasks.

According to an improvement of this embodiment the method further comprises the step of controlling the display to create a perspective graphical presentation of the icons related to the other kind of data items in the second window. This presentation puts more recent communication items into the foreground while older communication items are placed in a smaller size in the background of the presentation.

In yet a further improvement of the invention the method further comprises the step of informing the user about the selection of communication items by modifying the presentation of the associated icons on the display. In another improvement of the invention the method further comprises the step of informing the user about the selection of a contact my modifying the presentation of the associated icon on the display. Both improvements, individually or in combination, support the user in the execution of communication,

According to an advantageous embodiment of the invention the method further comprises the step of opening a new window within the graphical user interface, wherein the new window is associated with the selected communication channel.

It has been found useful if the method further comprises the step of placing copies of selected data items into the new window. In this way the user has immediately an overview about the communication items he is about to send.

In a similar way it is advantageous if the method further comprises the step of placing copies of selected contacts into the new window for the same reason mentioned above.

According to a second aspect of the invention a communication device is suggested which is provided with a display and processing means for controlling the display to present a graphical user interface enabling a user to execute the inventive method.

According to a third aspect of the invention a system is suggested which comprises a communication device and a server on which data items are stored. The communication device and the server are connected by a communication network.

The communication device is a device according to the invention enabling a user to execute a method according to the invention.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### Brief description of the drawings

In the accompanying drawing exemplary embodiments of the present invention are shown. It shows:
- Figure 1: a schematic illustration of a communication environment;
- Figure 2: a schematic illustration of the structure of a screen of an application of the present invention;
- Figure 3: a portion of figure 2 in greater detail; and
- Figures 4 to 9: schematic illustrations of the graphical user interface supporting the method for communicating according to the present invention

### Detailed description of embodiments of the invention

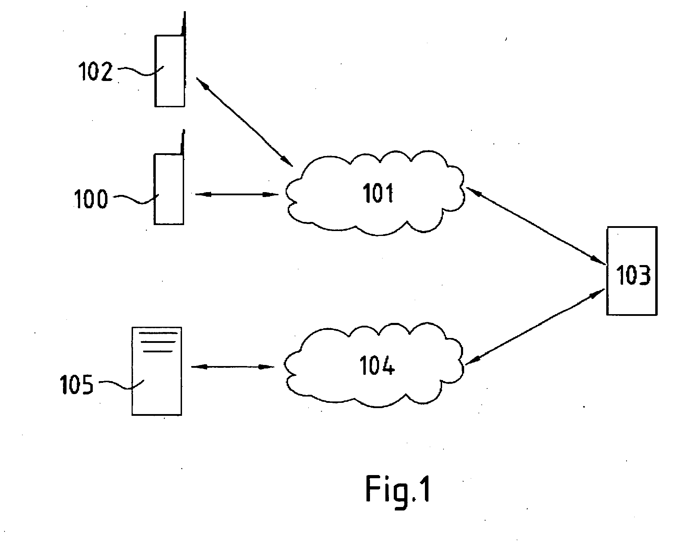

Figure 1 schematically depicts a communication environment. A mobile communication device 100, such as, a mobile phone, a PDA or the like is connected to a wireless public land mobile network (PLMN). The PLMN 101 is a wireless telecommunication network according to GSM standard or according to the UTMS standard for example. The user of the communication device 100 can set up a connection to another communication device 102 through the network 101. The communication devices 100 and 102 are only representative examples of a large plurality of communication devices. The network 101 is also connected with a server 103 of the network provider. Among other functionalities the server stores communication items, i.e. data files or data items, of the users of the network 101. A specific kind of communication items are contacts related to other individuals and their contact information such as e-mail addresses and telephone numbers.

Additionally, the server 103 is connected to a second communication network 104 such as the internet. Figure 1 shows also another communication device 105 such as a computer which is also connected to the network 104.

In an embodiment of the invention it is assumed that the computer 105 belongs to the user of the communication device 100. The computer 105 enables this user by means of appropriate software including access control features to access his communication items stored on the server 103. The access control can be based on codes and/or smart cards. This concept enables a user to work on communication items stored on the server 103 in a more convenient way because the computer 105 usually has a bigger screen and a more comfortable keyboard than a mobile communication device. The different kinds of communication items are presented on the display of the computer 105 as icons. The computer has conventional structure and comprises data storage and processing means as well as a display. For the purpose of the present invention the computer is operated as a display device. However, the display device of the present invention does not need to be a general purpose computer but it may be as well any other device which provides the required functionalities. For the sake of conciseness the display device as a whole is not shown in the drawings.

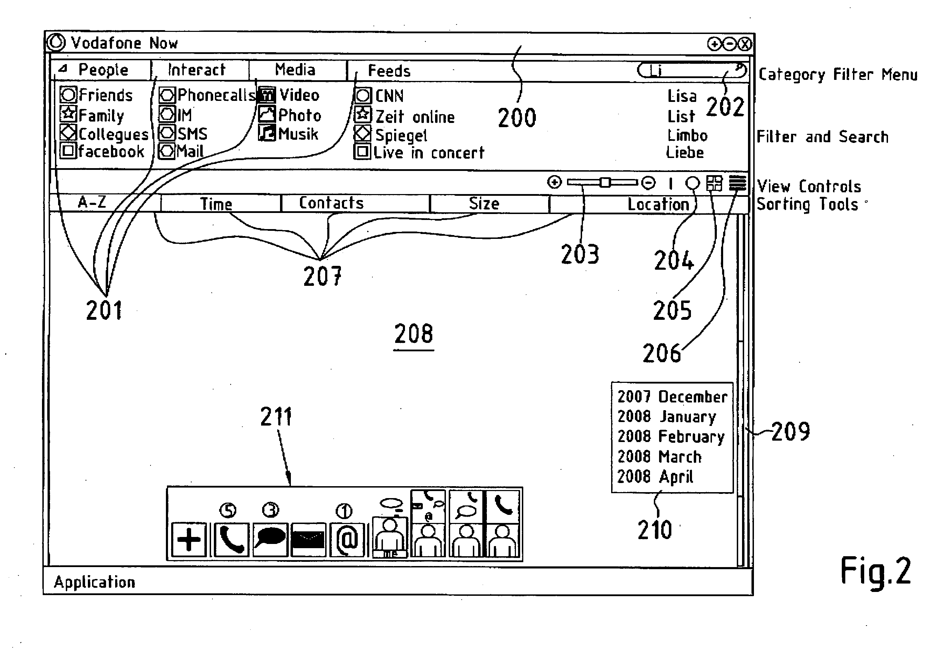

Figure 2 shows the structure of a display 200 of an application running on the computer 105. The computer 105 is not shown in Figure 2.

The top of the screen 200 provides the user with a category filter menu 201 allowing him to select between people, interaction, media, and feeds, such as are RSS-feeds. At the same time the user may search for certain keywords in a search window 202 and corresponding search results are displayed instantaneously below the search window 202. Below the category filter menu 201 there are icons enabling the user to select certain sub category filters such as friends, family, colleagues and facebook in the category filter of people. Facebook is only an example for a social network platform facilitating contacts to other people. The category filter of interaction is structured according to different types of communication items such as phone calls, instant messaging (IM), SMS-messages, and e-mails. The category of media provides a selection among video, photo, and music. The category filter of feeds is e.g. online services of news companies. It is noted that the search window 202 works independently of the filters but it can also be used in combination with the category and/or subcategory filters. Below the filter and search menu there are some input elements 203 to 206 allowing the user to control the view on the screen. The input elements 203 to 206 form a view control for the screen. Input element 203 is a horizontal slider which will be explained later in connection with other functionalities. With input element 204 a user selects to display all communication items in a 2-dimensional view on the screen as will be explained in more detail further below in the description. Input element 205 initiates a grid view of items and input element 206 a line view. These functionalities will be explained further below. Just below the view control there are sorting tools 207 provided allowing a user to sort items on the screen according to the alphabet from a to z, according to time, contacts, size, location is labelled with the abbreviation "interact" and it and by kind. The latter sorts the communication items shown on the display 200 according to the data type such as e-mail, SMS message etc. The biggest portion of the display 200 is covered by the content area 208 where icons representing the content are displayed. On the right hand side of the contact area there is a scroll bar 209 allowing the user to scroll through the communication items which will be explained later. The length of the scroll bar indicates the length of the time span. In one embodiment the user is informed about the time span by a label 210 which is faded in. Finally, below the content area 208 there is a menu bar 211 providing contextual options and a notification area.

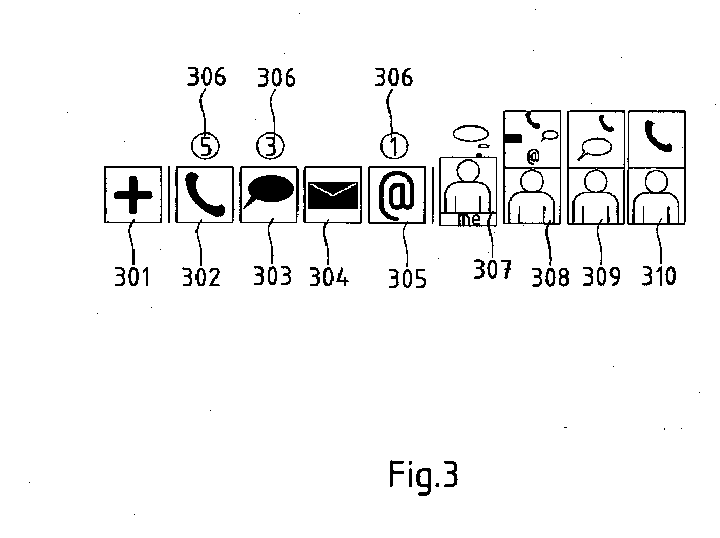

In figure 3 the menu bar and notification area 211 is shown in greater detail. There is an icon 301 which is a general option to add a new icon to the menu bar 211. Icons 302 to 305 provide different communication options. The icon 302 is for setting up a phone call, icon 203 is related to SMS- messages, icon 304 is related to e-mails and icon 305 to internet feeds, such as RSS-feeds from news providers. On top of the communication icons 302 to 305 there are indicators 306 indicating the number of missed events in the related content area. In the situation shown in figure 3 the user has missed five telephone calls; he has three unread SMS-messages and one unopened internet feed.

Next to the communication items 302 to 305 there is one shortcut icon 307 displaying the details of the user upon actuation of the icon 307. Finally, there are on the right hand side of the menu bar 209 three icons 308 to 310 which are related to windows of ongoing communication. On top of those icons 308 to 310 open communication channels are symbolised by associated symbols inside icons 311 to 313. Each of the icons 311 to 313 provides a shortcut directly to the respective communication window
in which one or several communication channels are open. The symbols representing the open communication channels correspond to the symbols which are used for the corresponding communication icons 302 to 305. The symbols are shown inside the icons 311 to 313.

The category menu filter 201 shown in figure 2 provides icons with labels to activate or deactivate a category filter. However, depending on the available space on the screen 200 of the communication device 105 the icons 201 of the category filter menu are also displayed without label if there is not sufficient space on the display. This may be the case if the user has opened a plurality of windows such that the icons displayed in each of the opened windows have to be reduced in size accordingly.

A user can activate or deactivate a filter by clicking on the icon 201 of the corresponding filter. The icon of a deactivated filter is displayed in grey on the screen, preferably in light green to be distinguishable from surrounding screen areas. The icon of an activated filter is displayed in a colour on the screen. In an exemplary embodiment of the invention "people" filter is displayed in yellow, the "interaction" filter is displayed in purple, the "media" filter is displayed in blue and the "feeds" filter is displayed in green, if these filters are activated.

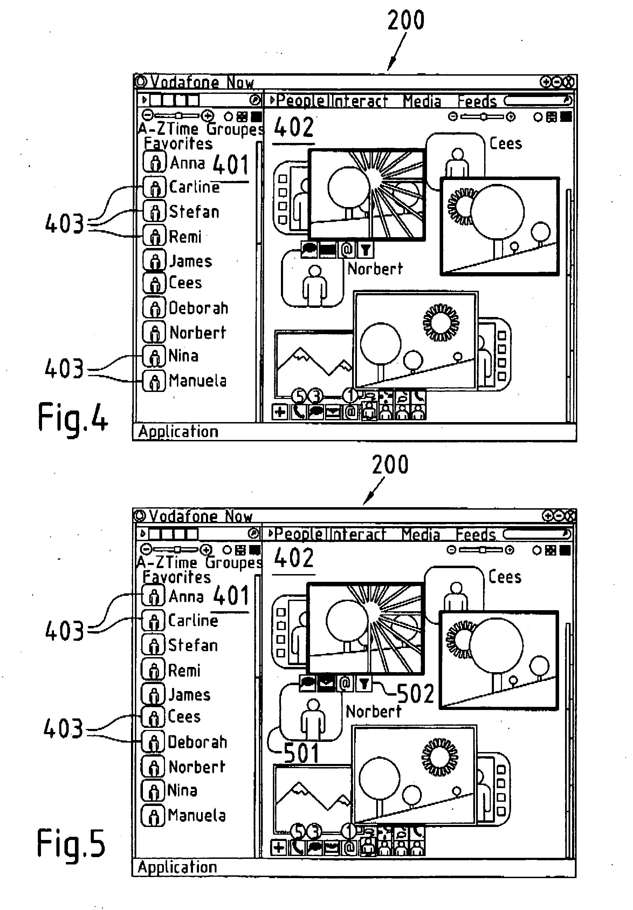

With reference to figures 4 to 9 a graphical user interface will be described in the following. The graphical user interface supports the user in efficiently communicating with other users.

Figure 4 shows a different view of the display 200. The window of the content area 208 is split into a left pane 401 and a right pane 402. The left pane 401 contains a list of contacts 403 with whom the user has already communicated. The right pane 402 is populated with communication items received by the user. In the right pane 402 the communication items are displayed in a perspective quasi 3-dimensional presentation in which older items appear to be further away in the background of the presentation while more recent communication items are placed in the foreground of the presentation. In addition to that, older items are perspectively reduced in size in the presentation. The z-axis in this presentation corresponds to the time axis, wherein the time evolves from the background of the presentation to the foreground. In this 3-dimensional viewing mode the attention of the user is attracted towards recent communication items because there are presented larger in the foreground of the presentation compared to older items which are presented smaller in the background of the presentation.

Navigation through the items by the user is realized by clicking on an item. All items are rearranged such that the clicked item is in the front of the screen. In this way the user may travel forward or backward in time by clicking on items which are in the foreground or in the background. As it has been mentioned above it is always necessary to display one item which has been received after the item onto which the user has clicked to allow the user to travel forward in time.

Alternatively, the user may scroll through time by using the scrolling element 209 (figure 2) on the right hand side of the content area 208 (figure 2). Moving the scroll bar up brings the items in the back forward corresponding to travelling backward in time because incoming new items are always placed in front of the display. Moving the scroll bar down achieves the opposite result

In the situation shown in figure 4 the user has just received photos, e.g. photos from a friend with whom he has made a trip or visited an interesting place. The user may share these photos he has just received from his friend now with other friends. The user selects the photos he would like to share with his friends by simply clicking on these photos with a curser (not shown.) As a result, the selected photos are highlighted by a coloured or bold frame to inform the user about his selection as it is shown in figure 5. It is convenient to display the photos in a quasi 3-dimensional presentation which provides the user not only information about the contents of the photo but about the temporal relationship helping the user to remember the context of each photo. In this way the user is also supported to prepare some explanations if he wants to accompany the photos.

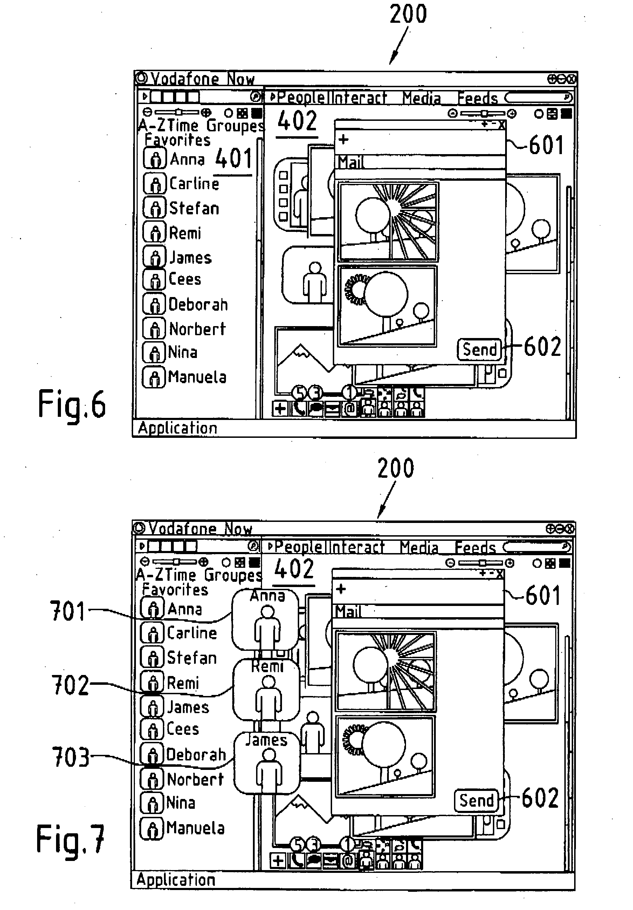

The presentation shown in figure 5 also contains a contact 501 which is associated with a menu bar 502 offering the user a selection of communication channels. In the present example, the user has decided to send the content via e-mail by clicking onto corresponding icon on the menu bar. As soon as the communication channel is selected, a new window 601 is opened on the right hand pane 402 as illustrated in figure 6. In the present example the new window 601 is an e-mail window. A send-button 602 is located in the lower right corner of the e-mail window 601.

Figure 7 illustrates the new step for communicating in the selected contents in which the user selects contacts from the list displayed on the left pane 401. As before, the selection is performed by clicking on the corresponding icons. Upon selection, a copy of the icon of a selected contact is displayed on the right pane 402 to unambiguously inform the user about the selections he has made. The copies of the selected icons are shown in figure 7 with reference numbers 701, 702, and 703. A contact may be deseleced by clicking onto the corresponding copy of the icon in the right pane 402 whereupon the copy of the icon disappears.

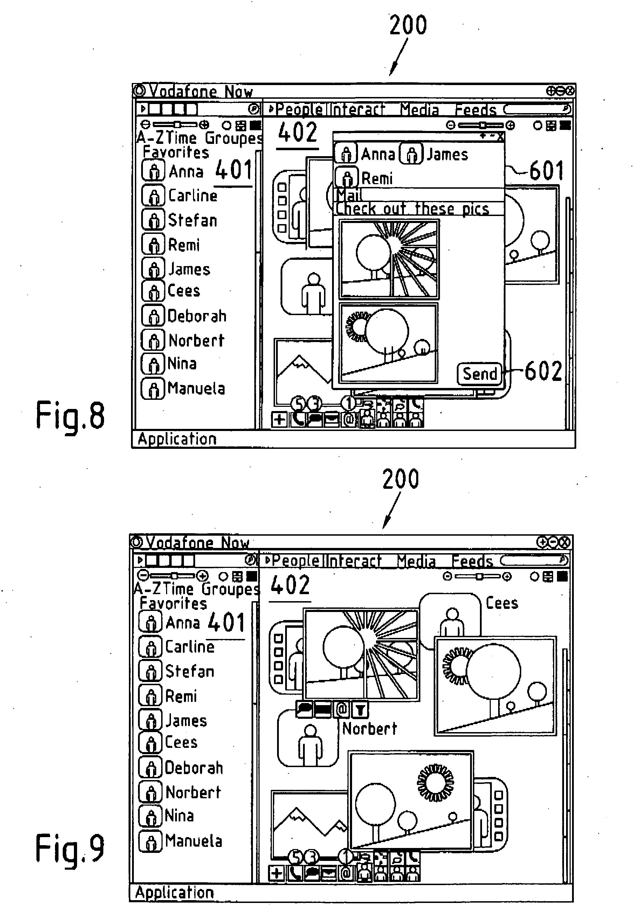

The user terminates the selection process by clicking on the e-mail window 602. In response to that the copies of the contact icons disappear from the right pane 402 and are integrated as recipients into the e-mail window 601 as shown in figure 8. The recipients in the e-mail window can still be edited as it is known in the art. The user completes the process by simply hitting the send-button 602. In this way a plurality of communication items are sent simultaneously to a plurality of recipients

As soon as the e-mail has been sent the display 200 return in its original state containing all communication items but none of them is highlighted any more as shown in figure 9.

The graphical user interface supports the user of the present invention to communicate in a more efficient way by facilitating to select a plurality of communication items and to select a plurality of contacts as recipients for the selected communication items.

### List of reference numerals:

- 100,102: communication device
- 101: network
- 103: server
- 104: network
- 105: communication device
- 200: display
- 201: category filter menu
- 202: search window
- 203: input element; horizontal slider
- 204: input element; user selects one item to be displayed on the full screen
- 205: input element; initiates a grid view of items
- 206: input element; initiates a line view
- 207: sorting tools
- 208: content area
- 209: menu bar
- 301: icon; general option to add a new icon to the menu bar
- 302: icon; setting up a phone call
- 303: icon; related to sms messages
- 304: icon; related to e-mails
- 305: icon; related to internet feeds
- 306: indicators
- 401: left pane
- 402: right pane
- 403: contacts
- 501: contact
- 502: menu
- 601: e-mail window
- 602: send-button
- 701 to 703: copies of contact icons

## Claims

1. Method for communicating between digital communication devices which are connected by a communication network, wherein the communication network provides access to stored data items, and wherein the method comprises the following steps:
- controlling a display of a source communication device to present icons within a graphical user interface, wherein the icons are related with data items;
- selecting data items to be communicated; selecting from a menu a communication channel which is to be used for communicating the selected data items;
- controlling the display of the source communication device to present contacts within the graphical user interface, wherein each contact is associated with one or several target communication devices;
- entering a single command to transmit the selected data items to all selected contacts.

2. Method according to claim 1, wherein the method further comprises the step of sorting the stored data items according to contacts.

3. Method according to claim 2, wherein the method further comprises the step of sorting the data items related to contacts in a first window (401) of the graphical user interface and sorting all other kinds of data items in a second window (402) of the graphical user interface.

4. The method according to claim 3, wherein the method further comprises the step of controlling the display to create a perspective graphical presentation of the icons related to the other kind of data items in the second window (402).

5. Method according to claim 1, wherein the method further comprises the step of informing the user about the selection of communication items by modifying the presentation of the associated icons on the display.

6. Method according to claim 1, wherein the method further comprises the step of informing the user about the selection of a contact my modifying the presentation of the associated icon on the display.

7. Method according to claim 1, wherein the method further comprises the step of opening a new window (601) within the graphical user interface, wherein the new window (601) is associated with the selected communication channel.

8. Method according to one or several of the preceding claims, wherein the method further comprises the step of placing copies of selected data items into the new window (601).

9. Method according to one or several of the preceding claims, wherein the method further comprises the step of placing copies of selected contacts into the new window (601).

10. Communication device provided with a display and processing means for controlling the display to present a graphical user interface enabling a user to execute the method according to one or several of the preceding claims.

11. System comprising a communication device and a server on which data items are stored, wherein the communication device and the server are connected by a communication network, wherein the communication device is a device according to claim 10 enabling a user to execute a method according to one or several of the preceding claims.
